# EUROPEAN PATENT APPLICATION

(11) **EP 2 026 613 A1**
(43) Date of publication of application: **18.02.2009**
(21) Application number: 07290996.3
(22) Date of filing: 10.08.2007
(51) Int. Cl.: H04W 4/06

(54) **Method of allocating radio resource quotas to control entities in a wireless telecommunication network**

(71) Applicant: Alcatel Lucent, 75008 Paris (FR)
(72) Inventor: Gruber, Markus, 70825 Korntal-Münchingen (DE); Zeller, Dietrich, 71067 Sindelfingen (DE)
(74) Representative: Richardt, Markus Albert

(57) **Abstract**

The invention relates to a method of allocating radio resource quotas to a plurality of control entities in a wireless telecommunication network, the control entities being adapted to control a radio resource usage of a base station, the method being performed by a radio network entity. The method enables single frequency network (SFN) operation of the wireless telecommunication network.

## Description

### Technical field

The invention relates to a method of allocating radio resource quotas to a control entity in a wireless telecommunication network, a method of providing a broadcast or multicast service to a base station in a wireless telecommunication network, a method of configuring a base station for a transmission of a broadcast or multicast service to user equipments in a wireless telecommunication network, a radio network entity, a service centre, a control entity and a computer program product.

### Background and related art

A challenging task in mobile telecommunication is to provide multimedia services like video services to a wireless user in an efficient way. Efficiency refers here especially to an efficient use of the scarce and expensive radio resource like frequency bands allocated to a network, such that as many users and different services as possible can be served in parallel within the radio frequency band. While existing second generation wireless networks support voice services in an efficient way, third generation wireless systems and packet-based wireless network's goal is to provide optimal service for data communication and distribution in the most efficient way. One example is mobile TV, which is a service which is provided to subscribers via telecommunication networks. Mobile TV involves providing TV services to mobile phones or in general user equipments (UEs). It combines the services of a mobile phone with television content and represents a logical step both for consumers and operators and content providers.

Mobile TV can be provided for example using new generation 3G (WCDMA/HSPA) networks. Such networks provide enough capacities in order to scale-up mobile TV services for the mass market.

By using, depending on the service, unicast or broadcast/multicast transmission techniques, network capacity and investments can be optimized. Broadcast/multicast techniques are applicable when (multimedia) data has to be provided from one source to a large number of receivers in parallel (e.g. popular TV programs). Unicast techniques are applicable when data has to be exchanged between different communication entities or data has to be distributed to one or few receivers (e.g. on-demand multimedia content).

One of the envisaged transmission modes makes use of the so-called SFN (Single Frequency Network) operation, in which all cells within an MBSFN (MBMS SFN) area transmit in a synchronized way the same content using the same radio resources, such that it is possible for the receiving UEs to combine the received signals on the physical layer. This requires that the radio resources (e.g. Radio Blocks, TTI, ...) and the physical layer parameter (e.g. MCS, modulation and coding scheme) are configured in an identical way in all the cells for each session of a MBMS user service. For this purpose, a multi-cell/multicast coordination entity (MCE) can be used. Such an MCE can control the cells belonging to one or many eNBs (base stations). However, if the SFN Area is chosen in such a way that it exceeds the area controlled by a single MCE, a co-ordination between these MCEs is required.

An MBSFN area consists of a group of cells that are coordinated by a simulcast transmission technique realized by transmission of identical waveforms at the same time from multiple cells. This coordination is carried out by the MBMS Coordination Entity (MCE), but for deployments with a very large number of eNBs, it may be necessary to have more than just one single MCE as coordination instance, while an MBSFN Synchronization Area may exceed the area controlled by a specific MCE.

For this purpose, the concept of master MCEs which control several slave MCEs has been introduced. This can for example be found in the 3GPP Tdocs R3-070962 'principles for resource allocation among SFN areas', Qualcomm, and R3-070661 'additional considerations related to MBMS coordination', Mitsubishi.

However, such concepts either require an allocation of resources in a strictly hierarchical way or they require an excessive configuration effort, because a configuration for every service and every session of a service is needed. Even in case the hierarchy is implemented by nominating one of the MCEs to take the role of a master MCE the problem remains to configure signaling links between this master and all other MCEs. However, it is desirable to minimize the signaling latencies in general and to minimize the configuration and operation efforts of the telecommunication network operators.

### Summary of the invention

The present invention provides a method of allocating radio resource quotas to a control entity in a wireless telecommunication network, the control entity being adapted to control a radio resource usage of a base station, the method being performed by a radio network entity, the method comprising receiving a radio resource request from a service centre, the service centre being adapted to provide a broadcast or multicast service to the base station. The method further comprises determining the radio resource quota by analyzing the received radio resource requests and providing a resource reference to the service centre, wherein the resource reference is being issued in response to the received radio resource requests, the resource reference authorizing the service centre to use the radio resources comprised in the quota for providing a broadcast or multicast service through the base station. The method further comprises providing a mapping information to the control entity, the mapping information comprising the resource reference and the radio resource quotas, wherein the resource reference is associated with the resource quotas.

A radio resource quota can for example comprise certain radio resources like RBs, TTIs and physical layer configuration parameters like the modulation and coding scheme (MCS) usable for a radio transmission. The radio network entity can be for example a radio network operator responsible for operation and maintenance. The control entity is preferably a Multi-cell/multicast Coordination Entity (MCE) which is adapted to control and coordinate the usage of radio resources of multiple base stations (eNodeBs). The method according to the invention has the advantage, that 'flat' architectures can be deployed with no extra physical nodes besides eNodeBs in the evolved universal terrestrial radio access network (E-UTRAN). In order to obtain such a flat architecture it is advantageous to abstract radio access network information to a level that can be used by the enhanced packet core (EPC) without violating the dogma that the EPC must be radio-agnostic, i.e. independent of details concerning the radio access network, so that the radio access network can be developed, changed and upgraded technically independent from the EPC which allows for a modular exchange of the radio access network without interfering with the EPC. Furthermore such an abstraction allows that the O&M (Operation and Maintenance) e.g. configuration and optimization of the E-UTRAN can take place independently from the EPC and Service Network O&M. These independency is a basic requirement facilitating that these infrastructures can be operated by different organizations.

By receiving the radio resource request from the service centre and determining the radio resource quota by analyzing the received radio resource requests, the radio network entity and the service centre are able to negotiate or determine agreements on MBMS bearer services. Therewith, for example during an offline configuration phase, a coordination between the user service level function represented by the service centre and the radio network entity can be performed. The service centre has knowledge about restrictions on the number of parallel MBMS sessions or the aggregated bit rate of such parallel services. This ensures that in general the initialization of the MBMS bearers by the service centre will not fail due to the lack of resources.

In the frame of such a coordination between the service centre and the radio network entity, the radio network entity provides the service centre with the resource references which represent the service level agreement between the user service provider and the radio network entity. In this agreement the radio network entity makes a commitment to provide sufficient resources for sessions initiated by the service centre within defined service areas and time frames as long as the traffic caused by the services is within the agreed boundaries, e.g. represented by a certain supported aggregated bit rate during determined times.

In accordance with an embodiment of the invention, the radio resource request comprises a first desired bandwidth and/or a first desired spatial service area and/or a first desired time schedule. Thereby, the service area may be for example represented by a respective list of service area IDs (SAI). Therewith, the agreements on the MBMS bearer services made between the service centre and the radio network entity comprise the SAI, the aggregated bit rate available for E-MBMS user services, restrictions in respect of time and possibly further information.

Regarding a requested first desired bandwidth, the service centre is only provided for a respective resource reference from the radio network entity, wherein for the service centre the resource reference only represents the equivalent of a certain bit rate provided by the resource reference. The resources physically assigned by the radio network entity are not known to the service centre. However, in order to associate a given resource reference with respective radio resources to be used by base stations for providing a service associated with such a resource reference, the radio network entity additionally configures the control entities (MCEs) with a mapping information, the mapping information comprising a mapping of resource references to respective radio resource quotas.

It is to be noted, that for determining the radio resource quota by analyzing the received radio resource requests the radio network entity may also consider and analyze further radio resource requests received from other service centers. This allows to highly flexibly allocate radio resource quotas to service centers by means of resource references.

In accordance with an embodiment of the invention, the mapping information further comprises the first spatial service area and/or the first time schedule. This has the advantage, that in case a control entity is receiving a resource reference together with a request for transmission of a service from the service centre, the control entity is able to decide by itself if the requested transmission of the service is valid (with respect to the resource reference) for transmission of the service in the requested spatial service area or during the requested time schedule.

In accordance with an embodiment of the invention, the allocation of the radio resource quota is performed for a single frequency network (SFN) operation of the base station. Therewith, a multitude of base stations which are controlled by various control entities can be operated for providing the same service in a coordinated way using PTM-MC (point to multipoint multi-cell) transmission. Therewith, participating cells have synchronized transmission of MBMS content and therewith considerably reduced interference by SFN (Single Frequency Network) operation. The resource references will not be used for PTM-SC (point to multipoint single-cell) and unicast transmission modes. In these modes, the respective radio resource quotas or radio resources are scheduled by the base stations themselves.

In accordance with an embodiment of the invention, the method further comprises dividing up the radio resource quota into a set of radio resource quota portions, wherein each radio resource quota portion of the set of radio resource quota portions is associated with a bandwidth portion of the first bandwidth. The method further comprises issuing for each of the radio resource quota portions a further resource reference, providing the further resource reference to the service centre and providing further mapping information to the control entity, wherein the further mapping information comprises the further resource references and a set of radio resource quota portions, wherein each of the further resource references is associated with its respective radio resource quota portion. This also allows for a highly flexible bandwidth allocation since instead of only issuing one given resource reference associated with one given radio resource quota, a multitude of resource references can be issued by the radio network entity which can then be used and if necessary combined by the service centre to individually select the most suitable resource reference associated with the respective bandwidth for transmission of an MBMS service. Thereby, the resource references can be organized in a mathematical structure like an ordered graph (e.g. tree) in which the allocation of a node implies the allocation of all successors. Each node of such a graph can be allocated a certain weight representing a respective bit rate.

In another aspect the invention relates to a method of providing by a service centre a broadcast or multicast service to a base station in a wireless telecommunication network, the method comprising providing a radio resource request to a radio network entity, receiving a resource reference from the radio network entity, wherein the resource reference is received in response to the provided resource request, the resource reference authorizing the service centre to use radio resource quotas associated with the quota for providing a broadcast or multicast service to the base station. The method further comprises providing a request for transmission of the service to a control entity, the control entity being adapted to control a radio resource usage of the base station, wherein the request for transmission comprises the resource reference, and providing the service to the base station.

Thereby, for the service centre it is transparent, which actual radio resource quotas are associated with the resource references. The service centre only knows the equivalent in terms of the bandwidth which is allocated by the radio network entity with respect to a given resource reference for transmission of a service by the service centre via a base station.

It has to be noted that the resource references do not need to be session or service specific. Also their scope might cover the whole service area (e.g. public land mobile network, PLMN) instead of only covering specific areas. This allows to keep the service level agreements as general as possible and the related configuration effort at a minimum. The service centre links the proper resource reference to an actual session for which it intends to initiate an MBMS bearer.

In accordance with an embodiment of the invention, the radio resource request comprises a first desired bandwidth and/or a first desired spatial service area and/or a first desired time schedule and/or the request for transmission further comprises a second desired bandwidth and/or a second desired spatial service area and/or a second desired time schedule. Thereby, for providing the service the resource reference is valid for the desired first spatial service area and/or the first desired time schedule and the resource reference is valid for the second spatial service area in case a second spatial service area is a part of the first spatial service area and/or the resource reference is valid for the second time schedule in case the second time schedule is a part of the first time schedule.

This has the advantage that a service centre is able to share one given resource reference with its associated transmission bandwidth or radio resource quota either over spatial service areas or in time. For example, the service centre may decide to use one given resource reference to provide a service at the same time to two spatial service areas which are not overlapping but which are both part of the first spatial service area for which the resource reference was issued by the radio network entity. Regarding the sharing in time, the service centre may use the same resource reference over two time periods which are not overlapping but which are both part of the time period for which the resource reference was issued by the radio network entity.

In a further alternative, the service centre is allowed to combine multiple resource references. For example, this enables the service centre to combine multiple service areas associated with multiple resource references to obtain one 'big' common service area. Also, by combining resource references it is possible to combine multiple small time schedules to one 'extended' time schedule. This also comprises combining multiple resource references for one given service area which allows to concurrently use the transmission bandwidth associated with each of the resource references in a summated manner.

In another aspect the invention relates to a method of configuring a base station for a transmission of a broadcast or multicast service to user equipments (UEs) in a wireless telecommunication network, the method being performed by a control entity, the method comprising receiving a mapping information from a network operator, the mapping information comprising a resource reference and a radio resource quota, wherein the resource reference is associated with the radio resource quota, the resource reference authorizing a service centre to use radio resources comprised in the quota for providing a broadcast or multicast service through the base station, the service centre being adapted to provide the broadcast or multicast service to the base station. The method further comprises receiving a request for transmission of the service from the service centre, wherein the request for transmission comprises the resource reference and configuring the base station by allocating radio resources to the base station, wherein the allocation of the radio resources is performed using the radio resource quota.

In accordance with an embodiment of the invention, the method further comprises determining if the resource reference comprised in the request for transmission of the service is valid for transmission of the service, wherein in case the resource reference is valid the base station can be configured and wherein in case the resource reference is invalid the base station is not configured. The validity of such a resource reference is thereby determined by referencing back to the mapping information which was provided from the network operator.

In case a resource reference is received from a service centre, the control entity may check if the same resource reference is already in use or not. In case the resource reference is already in use, the control entity may for example check if the received resource reference is just reused for service sessions to be broadcasted to further service areas not intersecting with the areas to which it is already provided. In this case the further service areas are not intersecting with the areas to which the service is already provided, the control entity may further check if the further service area is comprised in the service area originally allocated for the resource reference. If this is the case, the base station can be configured by the control entity.

It has to be mentioned, that for configuration of the base station using the mapping information associated with the resource reference it is advantageous, that a transmission mode using SFN operation is used. In case a transmission mode, in which there is no need for base stations to be coordinated, e.g. PTM-SC, is used, a configuration of the base stations using the radio resource quotas associated to the resource references in not performed.

### Brief description of the drawings

In the following preferred embodiments of the invention will be described in greater detail by way of example only making reference to the drawings in which:
- Figure 1: shows a block diagram of a wireless communication network,
- Figure 2: shows a flowchart illustrating a method of allocating radio resource quotas to a control entity,
- Figure 3: shows a flowchart illustrating a method of providing a service to a base station,
- Figure 4: shows a scheme illustrating a method of allocating radio resource quotas to a control entity,
- Figure 5: shows a scheme illustrating a method of requesting the start of an MBMS session,
- Figure 6: shows a scheme illustrating a method of configuring an MCE,
- Figure 7: shows a scheme illustrating an organization of resource references in a tree structure.

### Detailed description

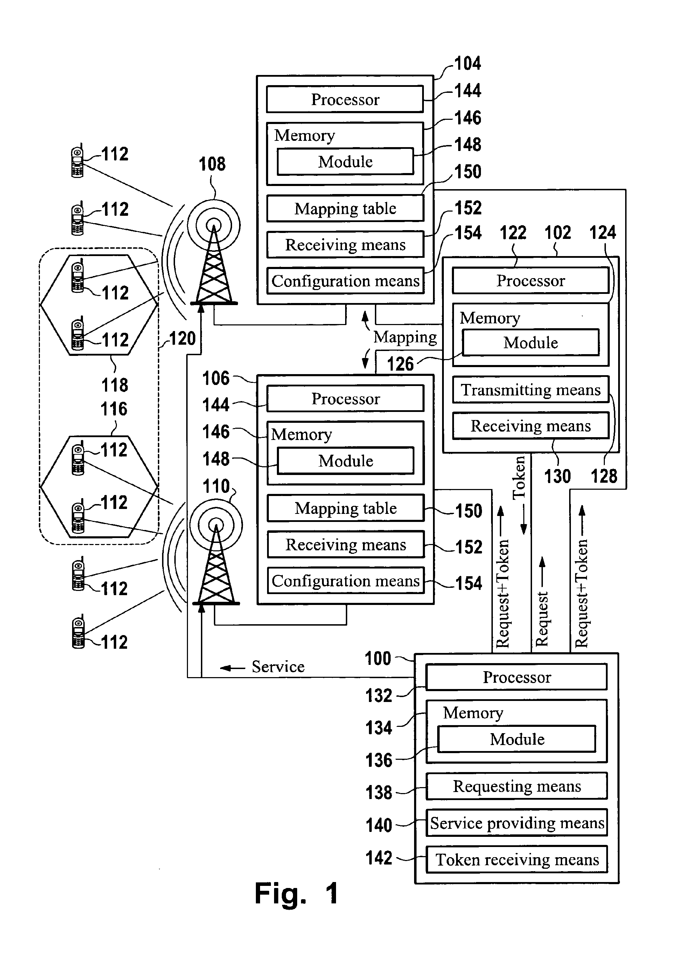

Fig. 1 shows a block diagram of a wireless communication network. The wireless telecommunication network comprises a broadcast/multicast service centre 100 (BM-SC), a radio network entity 102 (radio network operator), an MBMS coordination entity 104 (MCE) and an MCE 106. The MCEs 104 and 106 are each connected to base stations (eNodeBs) 108 and 110, respectively. Each base station 108 and 110 is adapted to transmit an MBMS service to user equipments (UEs) 112.

In the present example of fig. 1, the eNodeB 108 serves a cell 118 comprising several UEs 112 and the eNodeB 110 serves another cell 116 comprising several UEs 112. Thereby, the cells 116 and 118 are neighboring cells.

The BM-SC 100 comprises a processor 132, a memory 134 and the memory 134 comprises a module 136. Similarly, the radio network entity 102 comprises a processor 122, a memory 124 and the memory 124 comprises a module 126. The MCEs 104 and 106 each comprise a processor 144, a memory 146 and the memories 146 comprise a module 148.

Assuming, that the user equipments 112 in the cell 116 and the cell 118 have requested to receive the same MBMS content, it might be favorable that the eNodeBs 108 and 110 transmit said MBMS content using the same radio resources which means in an MBMS SFN operation mode. However, the eNodeB 108 is controlled by the MCE 104 and the eNodeB 110 is controlled by the MCE 106 and the MCEs 104 and 106 are operating independently of each other. For this reason, a coordination between the MCEs 104 and 106 has to be performed.

This is done by the radio network entity 102. For this reason the BM-SC 100 sends a request using its request means 138 to the radio network entity 102 which receives said request using its requesting means 130. By using the module 126 the radio network entity analyzes the received radio resource request and determines a respective radio resource quota. Using the transmitting means 128 of the radio network entity 102, a resource reference (token) is transmitted using the transmitting means 128 by the radio network entity 102 to the BM-SC 100, wherein the sent token (resource reference) is received by the resource reference receiving means 142 of the BM-SC 100.

Also at the same time, the radio network entity 102 provides a mapping information to the MCEs 104 and 106 using its transmitting means 128. Thereby, the mapping information comprises the resource reference and the radio resource quotas, wherein the resource reference is associated with the radio resource quotas. The mapping information is then received by the receiving means 152 of the MCEs 104 and 106. Thereupon, the mapping information is stored in a mapping table 150 of the MCE 104 and the MCE 106.

When the BM-SC decides to provide the MBMS service to the user equipments 112 which are in the cells 116 and 118, the BM-SC 100 sends a request together with the resource reference (token) to the MCEs 104 and 106. Thereupon, using the mapping table 150 the MCEs 102 and 106 can look up which radio resources are associated with said token in the mapping table 150. Using the configuration means 154, the MCEs 104 and 106 then schedule said radio resources in the respective eNodeBs 108 and 110. After the eNodeBs 108 and 110 have been configured for transmission of the MBMS service using identical radio resources, both eNodeBs 108 and 110 are now able to transmit the MBMS service content to the UEs 112 in a synchronized way.

Finally, using the service providing means 140 of the BM-SC 100, the BM-SC 100 transmits the MBMS service via the eNodeBs 108 and 110 to the user equipments 112 in the cells 116 and 118.

Therewith, a user equipment moving from the cell 116 to the cell 118 stays in the same MBMS SFN area with the advantage of reduced interference and therefore higher service quality.

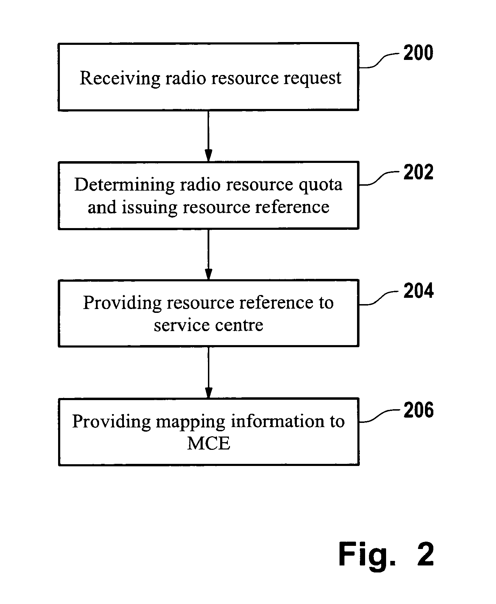

Fig. 2 shows a flowchart illustrating a method of allocating radio resource quotas to a control entity. In step 200 a radio resource request is received from a service centre, wherein the service centre is adapted to provide a broadcast or multicast service to a base station. Thereupon, in step 202 a radio resource quota is determined by analyzing the received radio resource request. Also in response to the received radio resource request a resource reference is issued in step 202. In step 204, this resource reference is provided to the service centre and in step 206 the resource reference and the radio resource quota are both provided to an MCE. Thereby, the mapping information comprises the resource reference and the radio resource quotas, wherein the resource reference is associated with the radio resource quotas.

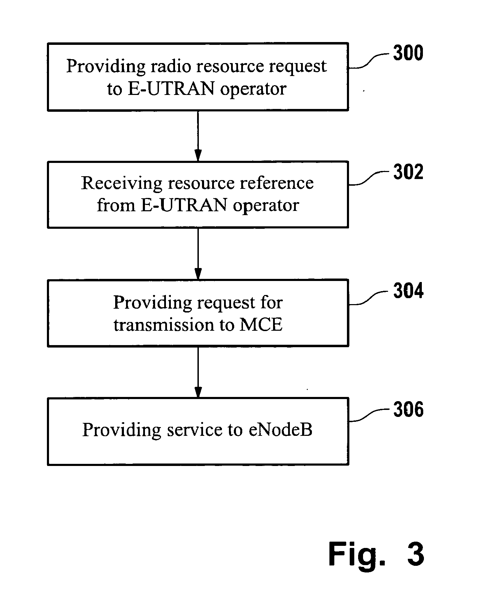

Fig. 3 shows a flowchart illustrating a method of providing a service to a base station. Thereby, the steps in fig. 3 are described with respect to the steps depicted in fig. 2. In step 300, a radio resource request is provided to an E-UTRAN operator, i.e. a radio network entity. This corresponds in fig. 2 to the step 200 where this radio resource request is received subsequently by the E-UTRAN operator. The resource reference provided in step 204 of fig. 2 is received in step 302 from the E-UTRAN operator.

The steps 300 and 302 are steps which can be performed in an initialization phase, basically time independent from the subsequent steps 304 and 306. The only requirement is that for performing the following steps 304 and 306 the steps 300 and 302 have been carried out before.

In step 304 a request for transmission of an MBMS service is provided to an MCE. Thereby, the request for transmission comprises the resource reference received previously in step 302. The MCE is then able to adjust and configure the radio resources of its connected eNodeBs for transmission of an upcoming service provided by the service centre. Thereby, the MCE can use the mapping information which was provided to the MCE in fig. 2 in step 206.

After providing the request from transmission to the MCE in step 304 the service is provided to the respective eNodeB(s) in step 306.

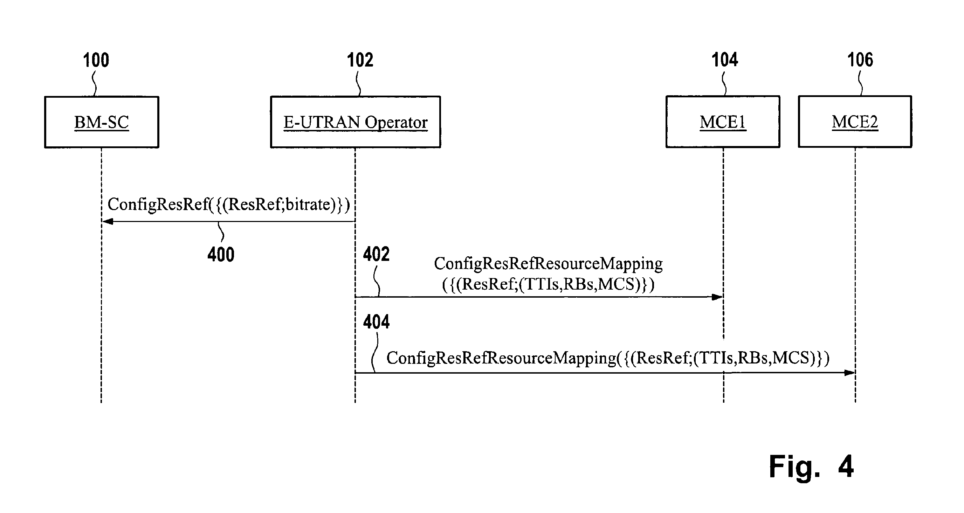

Fig. 4 shows a scheme illustrating a method of allocating a radio resource quota to a control entity. Not shown here is the first step where the service centre provides a radio resource request to the E-UTRAN operator 102. However, assuming such a forgoing first step, in response to the radio resource request provided from the BM-SC 100 to the E-UTRAN operator 102, the BM-SC receives in step 400 a resource reference from the E-UTRAN operator 102. In the present example, the BM-SC 100 is provided a resource reference and associated to this resource reference a bit rate.

The appending of a bit rate to the resource reference allows to flexibly issue by the E-UTRAN operator 102 a multitude of different resource references with respective bit rates. In this way, a division of the bit rates into shares can be provided to the BM-SC 100. This enables the BM-SC 100 to decide on the most appropriate resource reference - bit rate combination to use for providing a service.

Besides providing the resource references and associated bit rates in step 400 to the BM-SC 100, the E-UTRAN operator 102 also provides respective mapping information in steps 402 and 404 to the MCE 104 and to the MCE 106. Thereby, the mapping information provided to the MCEs 104 and 106 is the same. This allows to operate base stations associated to the MCEs 104 and 106 in a SFN transmission mode, in which base stations coordinated by the MCEs 104 and 106 operate using the same radio resource allocations.

Therefore, the mapping information provided in steps 402 and 404 from the E-UTRAN operator 102 to the MCEs 104 and 106 comprises the resource reference and associated with the resource reference radio resource allocations (RBs, TTIs) and physical layer configuration parameters (modulation and coding scheme, MCS) usable for a radio transmission.

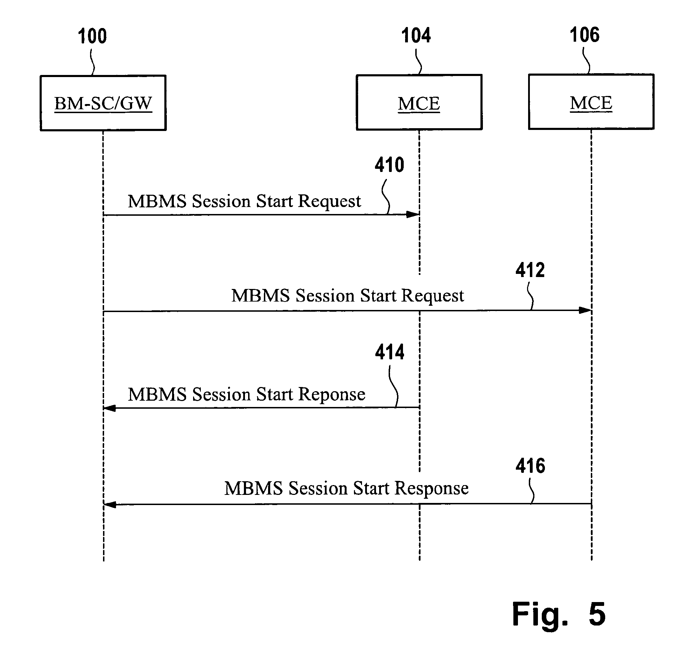

Fig. 5 shows a scheme illustrating a method of requesting the start of an MBMS session. Since the BM-SC 100 intends to provide a service to a service area which is covered by base stations which are coordinated by MCEs 104 and 106, in step 410 and 412 the BM-SC 100 sends identical MBMS session start requests to the MCEs 104 and 106. Instead of sending identical MBMS session start requests to the MCEs 104 and 106 it is also possible to send one MBMS session start request to a control plane gateway (CP-GW, not shown here), which itself is adapted to distribute further respective MBMS session start requests to the MCEs 104 and 106.

Thereby, the MBMS session start requests may comprise the resource reference which the BM-SC 100 intends to use for providing the service, the temporary mobile group identity (TMGI) which identifies the service, a quality of service (QoS) and the service area for which the service is intended to be provided to. In response to receiving the MBMS session start request, the MCEs 104 and 106 provide in steps 414 and 416 in response to receiving the MBMS session start requests an MBMS session start response.

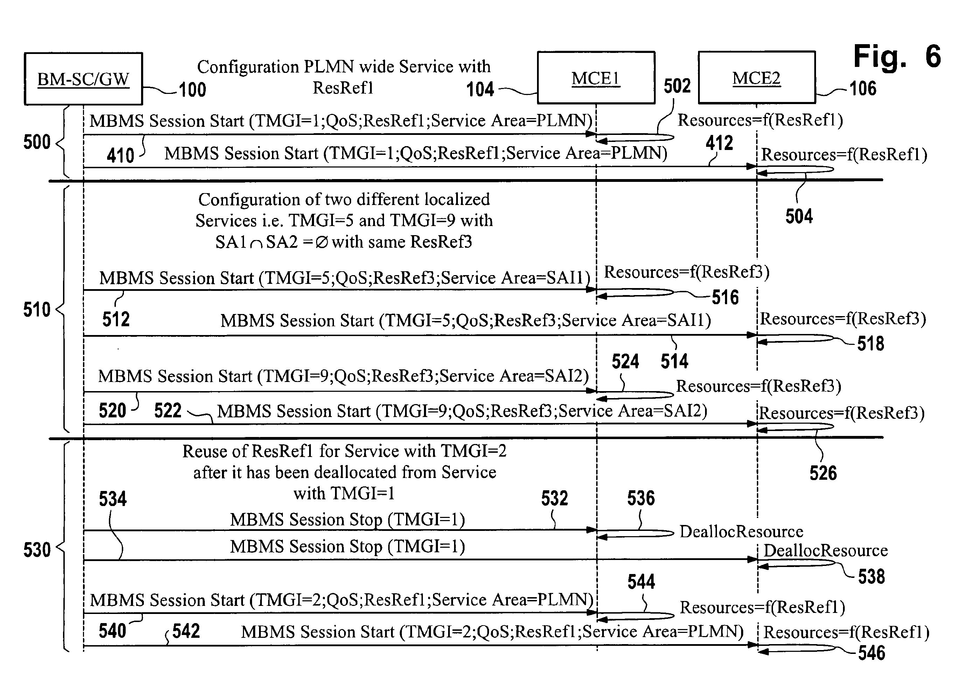

Fig. 6 shows a further scheme illustrating a method of configuring an MCE which is more detailed embodiment of figure 5. Thereby, procedure 500 shows the basic scenario for which one resource reference is used for providing a given service, in the present example a service with the TMGI = 1 and the service area = PLMN. After having provided the MBMS session start requests in steps 410 and 412 similarly as depicted in fig. 5, in response the MCEs 104 and 106 look up in a mapping table respective radio resources in steps 502 and 504, respectively, which need to be applied to respective base stations which are associated to the MCEs 104 and 106 and which cover the service area indicated in the MBMS session start request.

Procedure 510 depicts the possibility how an BM-SC 100 can share a given resource reference (ResRef3) at the same time over different services and different service areas. For example, in step 512 the BM-SC 100 sends an MBMS session start command to the MCE 104 which itself in step 516 looks up respective resources associated with the respective resource reference 3. The same holds for the MBMS session start request in step 514 which is submitted from the BM-SC 100 to the MCE 106 which leads to a look up of the MCE 106 in its mapping table in order to identify the radio resources associated with the resource reference 3.

However, in contrast to the procedure 500, the service area (SAI1) comprised in the MBMS session start requests in steps 512 and 514 covers only a part of the total service area for which the resource reference 3 was previously issued. Therefore, in steps 520 and 522 the BM-SC 100 can reuse the same resource reference 3 to provide a further service, in the present example with TMGI = 9, to a further service area (SAI2) whereby the service area SAI2 does not overlap with the service area SAI1. However, SAI1 and SAI2 are both part of the service area for which the resource reference 3 was previously issued.

In response to the steps 520 and 522 the MCEs 104 and 106 each look up respective resources in their mapping tables in steps 524 and 526 in order to configure the respective base stations associated with the service area SAI2 for usage of respective radio resources associated with the resource reference 3.

Besides the sharing of a given resource reference over multiple service areas as depicted in procedure 510, it is also possible to reuse a resource reference in time for another service after it has been de-allocated from a previous service. This is in detail depicted in procedure 530.

Procedure 530 assumes that procedure 500 has been previously applied. That means, that actually an MBMS session with TMGI = 1 for the service area PLMN is active. However, the BM-SC 100 decides to stop this presently occurring session and to reuse the resource reference 1 for a further session with TMGI = 2. For this purpose, in steps 532 and 534 the BM-SC 100 sends an MBMS session stop command to the MCEs 104 and 106, which in response free the corresponding resources in steps 536 and 538. Since the resource reference 1 is still valid for the actual period of time, the BM-SC 100 is allowed to send another MBMS session start request to the MCEs 104 and 106 comprising the same resource reference 1 and the same service area PLMN but the different TMGI = 2. Since the resource reference 1 is still valid in time, in response the MCEs 104 and 106 allocate resources associated with the resource reference 1 in steps 444 and 446. After this allocation, the transmission of the MBMS session with TMGI = 2 can start.

It has to be noted, that in case an MCE 104 or 106 receives radio resource references in the session start message it allocates the resources in accordance to the pre-configured mapping rules. However, in case the session start does not contain radio resource references the MCE allocates resources autonomously from the available resources.

It further has to be mentioned, that in case the MCE is co-located with each base station (eNodeB), the same rules apply as if the MCE would be part of a separate node.

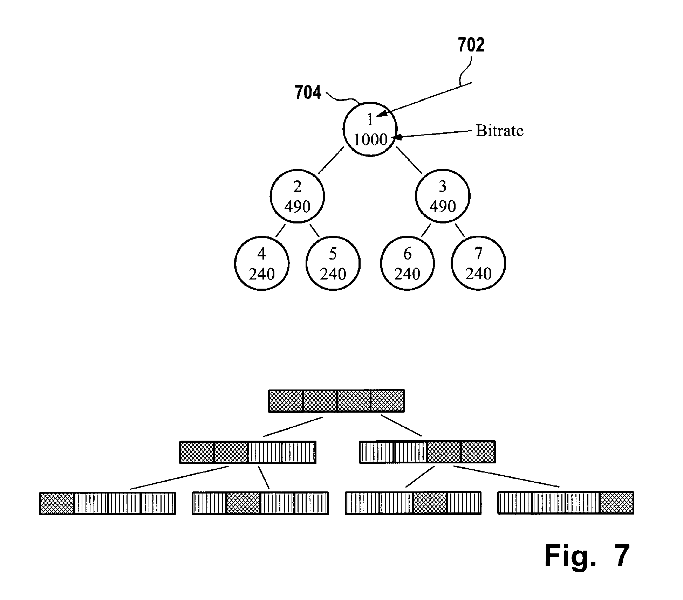

Fig. 7 shows a scheme illustrating an organization of resource references in a tree structure. In order to allow a flexible bandwidth allocation the radio network entity may allocate several resource references in response to receiving a radio resource request from a service centre. For example in the scenario depicted in fig. 7 a radio resource request from a service centre may comprise a request for transmission of a service with a bit rate of the value 1000. For this purpose, the radio network entity issued a resource reference with the number 1 and the bit rate value 1000. This resource reference was then provided to the service centre.

However, since the service centre later on may prefer to split that resource reference with its bit rate value 1000 into smaller pieces in order to provide multiple services with lower bit rates instead of one service with the high bit rate 1000, the radio network entity divides up the radio resource quota associated with the resource reference into a set of radio resource quota portions, wherein each radio resource quota portion of the set of radio resource quota portions is associated with the bandwidth portion of the bandwidth with the bit rate 1000.

This results in the triangle tree structure depicted in fig. 7 which consists of individual nodes 704 which are all attributed to a resource reference number 702 and a respective bit rate. Once a resource reference is used, both its child resource references and its parent resource references are not available anymore either, whereas all other resource references are still available. For example, if the resource reference 2 is used, resource references 6 and 7 (or alternatively only resource reference 3) are still available.

As can be seen, adding of the bit rates of the resource references 2 and 3 results in a smaller value than the bit rate of the parent resource reference 1 comprises. The reason is, that providing two services with lower bit rates requires more signaling than only providing one service with a higher bit rate. The lower bit rate values take account for this higher signaling emergence.

### List of Reference Numerals

- 100: BM-SC
- 102: Radio network entity
- 104: MCE
- 106: MCE
- 108: eNodeB
- 110: eNodeB
- 112: UE
- 116: cell
- 118: cell
- 120: Service Area
- 122: Processor
- 124: Memory
- 126: Module
- 128: Transmitting means
- 130: Receiving means
- 132: Processor
- 134: Memory
- 136: Module
- 138: Requesting means
- 140: Service providing means
- 142: Token receiving means
- 144: Processor
- 146: Memory
- 148: Module
- 150: Mapping table
- 152: Receiving means
- 154: Configuration means

- 702: Resource Reference number
- 704: Node

## Claims

1. A method of allocating radio resource quotas to a control entity (104; 106) in a wireless telecommunication network, the control entity (104; 106) being adapted to control a radio resource usage of a base station (108; 110), the method being performed by a radio network entity (102), the method comprising:
- receiving a radio resource request from a service centre (100), the service centre (100) being adapted to provide a broadcast or multicast service to the base station (108; 110),
- determining the radio resource quota by analyzing the received radio resource requests,
- providing a resource reference to the service centre (100), wherein the resource reference is being issued in response to the received radio resource request, the resource reference authorizing the service centre (100) to use the radio resources comprised in the quota for providing a broadcast or multicast service through the base station (108; 110),
- providing a mapping information to the control entity (104; 106), the mapping information comprising the resource reference and the radio resource quota, wherein the resource reference is associated with the radio resource quota.

2. The method of claim 1, wherein the allocation of the radio resource quota is performed for a single frequency network (SFN) operation of the base station (108; 110).

3. A method of providing by a service centre (100) a broadcast or multicast service to a base station (108; 110) in a wireless telecommunication network, the method comprising:
- providing a radio resource request to a radio network entity (102),
- receiving a resource reference from the radio network entity (102), wherein the resource reference is received in response to the provided resource request, the resource reference authorizing the service centre (100) to use radio resource quotas associated with the quota for providing a broadcast or multicast service through the base station (108; 110),
- providing a request for transmission of the service to a control entity (104; 106), the control entity (104; 106) being adapted to control a radio resource usage of the base station (108; 110), wherein the request for transmission comprises the resource reference,
- providing the service to the base station (108; 110).

4. The method of claim 3, wherein
- the radio resource request comprises a first desired bandwidth and/or a first desired spatial service area and/or a first desired time schedule, and/or
- the request for transmission further comprises a second desired bandwidth and/or a second desired spatial service area and/or a second desired time schedule.

5. The method of claim 4, wherein for providing the service
- the resource reference is valid for the desired first spatial service area and/or the first desired time schedule, and
- the resource reference is valid for the second spatial service area in case the second spatial service area is a part of the first spatial service area, and/or
- the resource reference is valid for the second time schedule in case the second schedule is a part of the first time schedule.

6. A method of configuring a base station (108; 110) for a transmission of a broadcast or multicast service to user equipments (UEs; 112) in a wireless telecommunication network, the method being performed by a control entity (104; 106), the method comprising:
- receiving a mapping information from a network operator, the mapping information comprising a resource reference and a radio resource quota, wherein the resource reference is associated with the radio resource quota, the resource reference authorizing a service centre (100) to use radio resources comprised in the quota for providing a broadcast or multicast service through the base station (108; 110), the service centre (100) being adapted to provide the broadcast or multicast service to the base station (108; 110),
- receiving a request for transmission of the service from the service centre (100), wherein the request for transmission comprises the resource reference,
- configuring the base station (108; 110) by allocating radio resources to the base station (108; 110), wherein the allocation of the radio resources is performed using the radio resource quota.

7. A radio network entity (102) adapted for allocating radio resource quotas to a control entity (104; 106) in a wireless telecommunication network, the control entity (104; 106) being adapted to control a radio resource usage of a base station (108; 110), the radio network entity (102) comprising:
- means (130) for receiving a radio resource request from a service centre (100), the service centre (100) being adapted to provide a broadcast or multicast service to the base station (108; 110),
- means (126) for determining the radio resource quota, wherein the means for determining the radio resource quota are adapted for analyzing the received radio resource requests,
- means (128) for providing a resource reference to the service centre (100), wherein the means for providing a resource reference to the service centre (100) are adapted for issuing the resource reference in response to the received radio resource request, the resource reference authorizing the service centre (100) to use the radio resources comprised in the quota for providing a broadcast or multicast service through the base station (108; 110),
- means (128) for providing a mapping information to the control entity (104; 106), the mapping information comprising the resource reference and the radio resource quotas, wherein the resource reference is associated with the radio resource quotas.

8. A service centre (100), the service centre (100) being adapted for providing a broadcast or multicast service to a base station (108; 110) in a wireless telecommunication network, the service centre (100) comprising:
- means (138) for providing a radio resource request to a radio network entity (102),
- means (142) for receiving a resource reference from the radio network entity (102), wherein the means for receiving a resource reference are adapted for receiving the resource reference in response to the provided resource request, the resource reference authorizing the service centre (100) to use radio resource quotas associated with the quota for providing a broadcast or multicast service through the base station (108; 110),
- means (138) for providing a request for transmission of the service to a control entity (104; 106), the control entity (104; 106) being adapted to control a radio resource usage of the base station (108; 110), wherein the request for transmission comprises the resource reference,
- means (140) for providing the service to the base station (108; 110).

9. A control entity (104; 106), the control entity (104; 106) being adapted for configuring a base station (108; 110) for a transmission of a broadcast or multicast service to user equipments (UEs; 112) in a wireless telecommunication network, the control entity (104; 106) comprising:
- means (152) for receiving a mapping information from a network entity, the mapping information comprising a resource reference and a radio resource quota, wherein the resource reference is associated with the radio resource quota, the resource reference authorizing a service centre (100) to use radio resources comprised in the quota for providing a broadcast or multicast service through the base station (108; 110), the service centre (100) being adapted to provide the broadcast or multicast service to the base station (108; 110),
- means (152) for receiving a request for transmission of the service from the service centre (100), wherein the request for transmission comprises the resource reference,
- means (154) for configuring the base station (108; 110), wherein the means for configuring the base station (108; 110) are adapted for allocating radio resources to the base station (108; 110), wherein the allocation of the radio resources is performable using the radio resource quota.

10. A computer program product (126; 136; 148) comprising computer executable instructions to perform any of the method steps as claimed in claims 1 to 2 or to perform any of the method steps as claimed in claims 3 to 5 or to perform the method as claimed in claim 6.

## Amended claims

### Amended claims in accordance with Rule 137(2) EPC.

**1.** A method of allocating radio resource quotas to a control entity (104; 106) in a wireless telecommunication network, the control entity (104; 106) being adapted to control a radio resource usage of a base station (108; 110), the method being performed by a radio network entity (102), the method comprising:
- receiving a radio resource request from a service centre (100), the service centre (100) being adapted to provide a broadcast or multicast service to the base station (108; 110),
- determining the radio resource quota by analyzing the received radio resource requests,
- providing a resource reference to the service centre (100), wherein the resource reference is being issued in response to the received radio resource request, the resource reference authorizing the service centre (100) to use the radio resources comprised in the quota for providing a broadcast or multicast service through the base station (108; 110),
- providing a mapping information to the control entity (104; 106), the mapping information comprising the resource reference and the radio resource quota, wherein the resource reference is associated with the radio resource quota.

**2.** The method of claim 1, wherein the allocation of the radio resource quota is performed for a single frequency network operation of the base station (108; 110).

**3.** A method of providing by a service centre (100) a broadcast or multicast service to a base station (108; 110) in a wireless telecommunication network, the method comprising:
- providing a radio resource request to a radio network entity (102),
- receiving a resource reference from the radio network entity (102), wherein the resource reference is received in response to the provided resource request, the resource reference authorizing the service centre (100) to use radio resource quotas associated with the quota for providing a broadcast or multicast service through the base station (108; 110),
- providing a request for transmission of the service to a control entity (104; 106), the control entity (104; 106) being adapted to control a radio resource usage of the base station (108; 110), wherein the request for transmission comprises the resource reference,
- providing the service to the base station (108; 110).

**4.** The method of claim 3, wherein
- the radio resource request comprises a first desired bandwidth and/or a first desired spatial service area and/or a first desired time schedule, and/or
- the request for transmission further comprises a second desired bandwidth and/or a second desired spatial service area and/or a second desired time schedule.

**5.** The method of claim 4, wherein for providing the service
- the resource reference is valid for the desired first spatial service area and/or the first desired time schedule, and
- the resource reference is valid for the second spatial service area in case the second spatial service area is a part of the first spatial service area, and/or
- the resource reference is valid for the second time schedule in case the second schedule is a part of the first time schedule.

**6.** A method of configuring a base station (108; 110) for a transmission of a broadcast or multicast service to user equipments (112) in a wireless telecommunication network, the method being performed by a control entity (104; 106), the method comprising:
- receiving a mapping information from a network operator, the mapping information comprising a resource reference and a radio resource quota, wherein the resource reference is associated with the radio resource quota, the resource reference authorizing a service centre (100) to use radio resources comprised in the quota for providing a broadcast or multicast service through the base station (108; 110), the service centre (100) being adapted to provide the broadcast or multicast service to the base station (108; 110),
- receiving a request for transmission of the service from the service centre (100), wherein the request for transmission comprises the resource reference,
- configuring the base station (108; 110) by allocating radio resources to the base station (108; 110), wherein the allocation of the radio resources is performed using the radio resource quota.

**7.** A radio network entity (102) adapted for allocating radio resource quotas to a control entity (104; 106) in a wireless telecommunication network, the control entity (104; 106) being adapted to control a radio resource usage of a base station (108; 110), the radio network entity (102) comprising:
- means (130) for receiving a radio resource request from a service centre (100), the service centre (100) being adapted to provide a broadcast or multicast service to the base station (108; 110),
- means (126) for determining the radio resource quota, wherein the means for determining the radio resource quota are adapted for analyzing the received radio resource requests,
- means (128) for providing a resource reference to the service centre (100), wherein the means for providing a resource reference to the service centre (100) are adapted for issuing the resource reference in response to the received radio resource request, the resource reference authorizing the service centre (100) to use the radio resources comprised in the quota for providing a broadcast or multicast service through the base station (108; 110),
- means (128) for providing a mapping information to the control entity (104; 106), the mapping information comprising the resource reference and the radio resource quotas, wherein the resource reference is associated with the radio resource quotas.

**8.** A service centre (100), the service centre (100) being adapted for providing a broadcast or multicast service to a base station (108; 110) in a wireless telecommunication network, the service centre (100) comprising:
- means (138) for providing a radio resource request to a radio network entity (102),
- means (142) for receiving a resource reference from the radio network entity (102), wherein the means for receiving a resource reference are adapted for receiving the resource reference in response to the provided resource request, the resource reference authorizing the service centre (100) to use radio resource quotas associated with the quota for providing a broadcast or multicast service through the base station (108; 110),
- means (138) for providing a request for transmission of the service to a control entity (104; 106), the control entity (104; 106) being adapted to control a radio resource usage of the base station (108; 110), wherein the request for transmission comprises the resource reference,
- means (140) for providing the service to the base station (108; 110).

**9.** A control entity (104; 106), the control entity (104; 106) being adapted for configuring a base station (108; 110) for a transmission of a broadcast or multicast service to user equipments (112) in a wireless telecommunication network, the control entity (104; 106) comprising:
- means (152) for receiving a mapping information from a network entity, the mapping information comprising a resource reference and a radio resource quota, wherein the resource reference is associated with the radio resource quota, the resource reference authorizing a service centre (100) to use radio resources comprised in the quota for providing a broadcast or multicast service through the base station (108; 110), the service centre (100) being adapted to provide the broadcast or multicast service to the base station (108; 110),
- means (152) for receiving a request for transmission of the service from the service centre (100), wherein the request for transmission comprises the resource reference,
- means (154) for configuring the base station (108; 110), wherein the means for configuring the base station (108; 110) are adapted for allocating radio resources to the base station (108; 110), wherein the allocation of the radio resources is performable using the radio resource quota.

**10.** A computer program product (126; 136; 148) comprising computer executable instructions to perform any of the method steps as claimed in claims 1 to 2 or to perform any of the method steps as claimed in claims 3 to 5 or to perform the method as claimed in claim 6.
